# EUROPEAN PATENT APPLICATION

(11) **EP 1 469 575 A1**
(43) Date of publication of application: **20.10.2004**
(21) Application number: 02793149.2
(22) Date of filing: 20.12.2002
(51) Int. Cl.: H02J 7/04, H02J 7/14, B60R 16/02

(54) **SYSTEM AND METHOD FOR THE CONTROLLED TRANSFER OF ENERGY IN NETWORKS COMPRISING SECTORS THAT ARE POWERED BY TWO DIFFERENT BATTERIES**

(30) Priority: 31.12.2001 ES 200102923
(71) Applicant: Lear Automotive (EEDS) Spain, S.L., 43800 Valls, Tarragona (ES)
(72) Inventor: BORREGO BEL, Carles, c/o Carrer Fuster S/N, 43800 Valls (Tarragona) (ES); FIGUEROLA BARRUFET, Gabriel, c/o Carrer Fuster S/N, 43800 Valls (Tarragona) (ES); FONTANILLES PINAS, Joan, c/o Carrer Fuster S/N, 43800 VALLS (TARRAGONA) (ES)
(74) Representative: Primo de Rivera y Urquijo, Jose Antonio
(86) International application number: PCT/ES2002/000612
(87) International publication number: WO 2003/056682

(57) **Abstract**

An architecture with two batteries B1, B2 for networks (17, 18) provided with a unit CB1, CB2 with a control module (10, 11) of the SOC/SOH of B1, B2, power distribution boxes SDN1, SDN2, SDN3 with a microcontroller (1, 2, 3) and communications bus (19), is provided with a detecting device (30) of the voltage and/or polarity of an external supply susceptible to being connected to said batteries B1, B2, and controlled switching devices (33, 34) for routing the external power flow to one of batteries B1 or B2, said boxes SDN1, SDN2, SDN3 being interconnected and connected to said units CB1, CB2 for permanent monitoring of the SOC/SOH of said batteries B1 and B2 and to provide a controlled power transfer between them.

## Description

### Field of the invention

The present invention refers to a system and method applied for providing controlled power transfer in networks with several sectors fed by two different batteries, applicable to automotive vehicles, with an architecture comprising a first battery B1 and a second battery B2, particularly operating at differentiated voltage levels (Dual Voltage or DV system) which can be charged from a generator G, both batteries B1, B2 being provided with a control module of their state of charge and state of health, SOC, SOH. Batteries B1, B2 feed respective networks where different loads are included, a first of them comprising at least one start up device and a second one integrating security and supervision or stand-by modules. Power is distributed to said networks from said batteries B1, B2 from several distribution boxes which include a management microcontroller, and the system integrates a communications bus for a centralized or decentralized overall management thereof. It is generally provided with several of said power distribution boxes placed in different areas of the vehicle.

Such DV systems typically comprise a first 14 V network used for supplying low consumption loads, for example for lighting and control signal supply, susceptible to in turn being fed by the second network at a higher voltage, typically 42 V, through a DC/DC electric converter or from a first battery B1. Said second 42 V network is used for supplying high consumption loads, such as the start up motor, heating system, electromagnetic valve control, motors, such as those of the window openers, position adjustment devices, fans, etc., and is fed by a generator G (vehicle alternator) or from a second battery B2.

With the aforementioned, the invention is applicable within architectures implemented in the automobile sector in order to achieve sectorization of power, according to which principle, a series of areas are defined in the vehicle, in each of which there is a "smart" node or power distribution box with a microcontroller and management programs implemented on the base thereof, which locally controls the loads and switches and detectors, sending and receiving information through a data bus, which permits greatly reducing not only the number of wires, but also its length, without forgetting the decrease in the number of wires passing from one area of a vehicle to another, which parameter remarkably influences in wiring assembly ease.

The invention provides this field with a new functionality implemented through a method comprising algorithms run by said microcontrollers of said power distribution boxes which permit optimally managing power available at any time in a system with at least two batteries B1 and B2 with permanent control of their states of health and charge, as well as control of power flows supplied by each one of said batteries B1 and B2.

### Background of the invention

British patent GB-A-2,302,622 discloses a management system of a vehicle with a double battery comprising: a first battery B1 intended for feeding a series of loads of a first service network which is connected to one of the posts of said battery B1, to which battery a generator is also connected; a second battery B2 intended for feeding a second network intended essentially for start up functions and a switch controlled by a control unit or module which, according to the state of charge of both batteries B1 and B2 and the load demands of said respective networks, enables passing of current between batteries B1, B2 and corresponding networks, in either direction, always giving priority to start up functions.

Other patents such as German patent DE-A-196 45 944 A1 and US patent US-A-6,232,674 disclose structures and systems intended for the same explained purpose and which provide similar performances.

DV systems for motorized vehicles, in which field the invention has a particular application, are disclosed in numerous patent documents and patent applications, thus being able to mention the following: US 5,334,926, US 6,232,674, EP 337,155, EP 539,982, EP 1,033,804, WO 99/22434 and WO 00/76812.

British patent application GB-A-2,342,515 discloses a DV architecture with two networks fed by respective batteries B1, B2 for a motorized vehicle, which proposes the use, in addition to a generally classic one-way DC/DC converter to feed the low voltage network from the higher voltage network, of a second two-way converter for, as from a state of charge control of batteries B1 and B2, being able to adjust power flows between its inputs/outputs. Said second DC/DC converter is used when, in addition to normal functioning (to feed the lower voltage network from the higher voltage network), the lower voltage network is fed from the battery connected to the higher voltage branch, the higher voltage branch is fed from the two batteries B1, B2, or when battery B1, which feeds the low voltage branch, is charged from the higher voltage network.

US patent US-B1-6,232,674 refers to a control device for assembly in an automotive vehicle with at least two batteries which can be charged from a generator and feed several loads. The control device is inserted between the two batteries and includes a network supply element, a microcontroller associated with a communications bus, a DC/DC converter and a final short-circuit verification step. According to different information sent to said microcontroller regarding network power supply demands, the electric control system arranges a connection between the two batteries and after its disconnection, it enters a stand-by mode.

International application ES00/00393, belonging to the same applicant, discloses a modular assembly connected to a battery for supervision of its state and protection, comprising in a casing which can be coupled to the posts of said battery: a first module applied to a disconnection of the power supply coming from said battery, a second electric module applied to a state of health (SOH) and state of charge (SOC) dynamic measurement of the battery, and a third electronic module intended for a control and management of all or part of the loads which said battery feeds.

Patent applications WO-A-95/13470 and EP-A-0892486 disclose DV electric current distribution systems with the participation of generally one-way DC/DC converters.

International application ES00/00173 of the same applicant refers to a dual voltage electric distribution system, which proposes the integration of DC/DC converters in power distribution boxes, such as those referred to at the beginning, having provided that the microcontroller included in said boxes controls the converter operative as well as control signal flows and power flow to the loads.

Although the architecture of the electric power distribution system of the present invention is similar to that of said international application ES00/00173, and the batteries of said system include modules similar to that disclosed in international application number ES00/00393, the functionalities of the present invention cannot be reached with these or other mentioned background.

### Description of the invention

The system of the present invention with an architecture such as that mentioned in the first paragraph of this specification, although the two batteries B1 and B2 could have the same voltage level, and implemented in a vehicle, such as an automobile, is characterized by additionally comprising a device for detecting a voltage and/or polarity level of an external supply susceptible to being connected on at least one of the posts of one of the two batteries B1 or B2, and several controlled switching devices for routing said external power flow towards a predetermined one of said two batteries B1 or B2. On the other hand, said power distribution boxes to the loads, with a microcontroller, are interconnected and connected to said control modules of batteries B1, B2 for the purpose of permanently monitoring the state of health and state of charge of said two batteries B1 and B2 and for providing a controlled power transfer between them, at any time, even in a situation when the vehicle engine turn-on key is off, regardless of the consumption, and for foreseeing future demands.

According to a first aspect of the invention, the two batteries B1 and B2 have differentiated voltage levels, for example, 12 V and 36 V, respectively, and each one of said power distribution boxes includes a DC/DC converter, at least one of said DC/DC converters being two-way, and permitting said power transfer from one of said batteries B1, B2 to another in either direction, according to the result of said monitoring of the state of charge and state of health thereof.

In a preferred embodiment of the invention, three of said power distribution boxes are arranged, one of them for feeding loads of the front area of the vehicle, a second one intended for supplying a central area thereof, and a third one intended for the supply of power to a rear part of the vehicle. According to said preferred embodiment, a first one of said boxes is fed by battery B1 at a lower voltage level and includes said two-way converter permitting supplying loads to said first voltage level and to a second, higher voltage level, the two remaining power distribution boxes being connected to battery B2 at a higher voltage level and integrating a one-way converter which enables only the supply of power to said first, lower voltage level.

According to the invention, each one of batteries B1, B2 comprises a power disconnection or BCO (Battery Cut Off) device applied to the automatic disconnection of the corresponding battery B1, B2 of its network in case of accident or due to instructions received from one of the microcontrollers of the distribution boxes or from the control module. To permit carrying out diagnostic tasks or repairs on the electric networks and electronic systems of the vehicle, it has been foreseen to integrate a user-accessible switch for enabling or disabling said BCO disconnection devices.

The invention also provides a method based on the use of the power distribution system explained, a method characterized by carrying out permanent monitoring of the state of health (SOH) and state of charge (SOC) of each one of said two batteries B1, B2, and at that same time control of the voltage or polarity of an external supply susceptible to being connected to one of the posts of one of said batteries B1, B1, and by actuation by means of said microcontrollers (of either the power distribution boxes or of the modules associated to each battery) for ensuring power transfer between said two batteries B1, B1 at any desired time.

The system and method according to the invention, implemented in a DV architecture for a vehicle, such as that mentioned and including control means, permit carrying out the following functions:
a) 14 V power supply for security and stand-by functions. If necessary, the system will convert a 42 V power flow to a 14 V power flow, even though the vehicle key is in off position, thus decreasing the possibilities of interrupting the supply of the security and stand-by modules which are fed at 14 V; through switches of said BCO disconnection devices, general disconnection of the system has been provided for in case of power loss which does not cause blowing fuses (Ohmic short-circuits, broken power devices such as FET, etc.);
b) automatic start up from only the system implemented on the vehicle or the internal system, permitting controlled loading of the 36 V battery B2 through 12 V battery B1; the system will check that the SOC/SOH of 12 V battery B1 is correct since, otherwise, said internal start up will not be permitted; the discharge cycles of 14 V battery B1 (for example, X seconds every Y minutes), and for ensuring the efficacy of the charging of the 36 V battery, it is also necessary to ensure that the 12 V battery does not supply power to unnecessary loads (disconnecting the corresponding BCO disconnection devices of each one of batteries B1 and B2) ;
c) vehicle start up with external help from another vehicle; the system will permit the power connection from a 14 V as well as 42 V outside source, automatically detecting which is said voltage level and transferring the power to suitable battery B1 or B2, in every case; to prevent connections between batteries with different voltages, a polarized connecting system will be used;
d) diagnosis or repair mode: when the vehicle is at a dealership or shop for its electric-electronic diagnosis or repair, it has been foreseen that the system be provided with a switch which actuates the BCOs, such that it prevents having to disassemble the terminal or separating the module associated to the battery, this switch thus also fulfilling the function of transport fuse.

It should be indicated that in spite of the modifications implied by the system and method of the invention (making the BCO play an auxiliary role in some cases), the disconnection functionality of both batteries B1 and B2 provided by the respective BCO disconnection device switches will be maintained in the case of an impact on the vehicle.

To better understand the features of the invention, it will be described below on the basis of a possible embodiment example shown on the attached sheets of drawings, which must be considered merely illustrative and non-limiting.

### Brief description of the drawings

In said drawings:

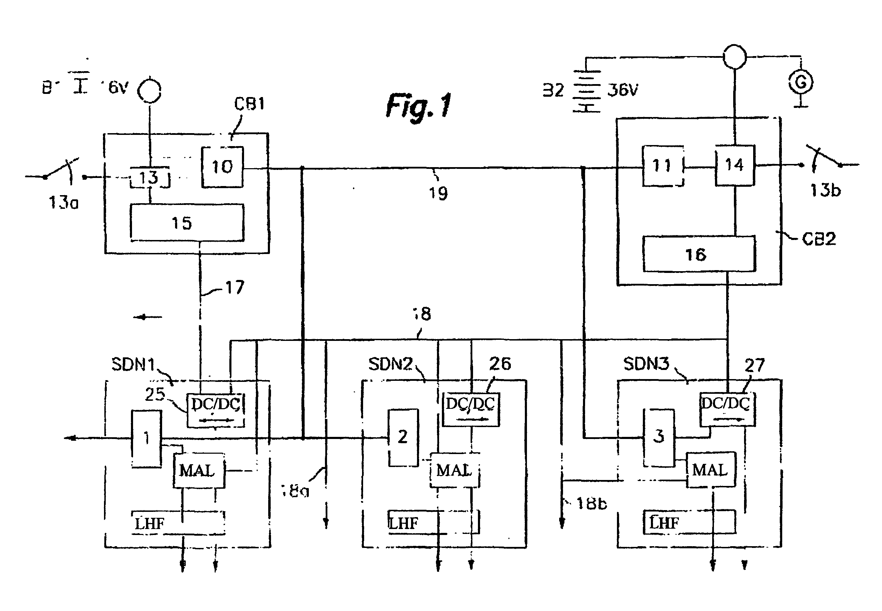

Figure 1 schematically shows an architecture example of an implementation of the principles of the invention.

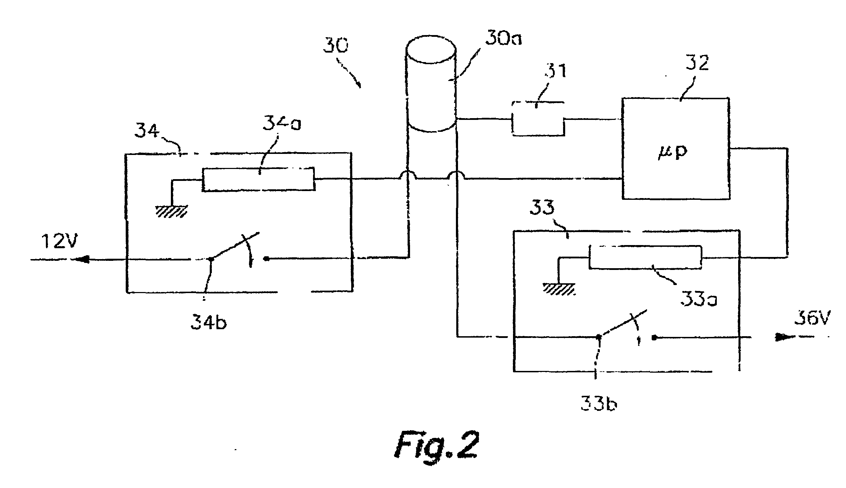

Figure 2 simply shows a possible implementation of the polarized connecting and/or with voltage detection for the case of connection of the electric power distribution system to an external supply source, making it possible that whatever the nature thereof may be (vehicle at 14 V or at 42 V), said connection and external power supply are directly managed by the system with no disturbance for the integrity thereof and essentially of its at least two batteries B1 and B2, in this example at 12 V and 36 V voltage levels, respectively.

### Detailed description of an embodiment example of the invention

Figure 1 shows an architecture for implementation of the system and method according to the invention. Said system comprises a first 12 V battery B1 and a second 36 V battery B2 which feed respective networks 17 (14 V) and 18 (42 V) according to a typical Dual Voltage structure, hereinafter DV. Each one of said batteries B1 and B2 has corresponding control units CB1 and CB2, which basically comprise a monitoring module 10, 11 of the state of charge SOC and state of health SOH of the corresponding battery, a disconnection device 13, 14 of batteries B1, B2 from their respective networks 17, 18 and a fuse box 15, 16, having a main hierarchy with regard to other fuses included in networks feeding said batteries B1, B2. Each unit CB1, CB2 is provided with an external switch 13a, 14b for acting directly on those disconnection devices 13, 14, when necessary, connected to a battery post, preventing the physical disconnection of the terminal from the corresponding network.

As shown in figure 1, 12 V battery B1, through control unit CB1, feeds 14 V network 17 which includes a series of security and stand-by modules (arrow on the left side of the figure pointing away from said network 17), which can be supplied in spite that BCO device 13 disconnects the battery from its network 17. In this 14 V network 17, there are several resistive loads, generally lamps of a diverse nature and other low consumption devices. The network 17 is connected to a power distribution box SDN1 or Smart Distribution Node, located in the engine compartment. Distribution box SDN1 houses a two-way DC/DC converter 25, to which the 14 V network 17 converges and which has an output connected to the second 42 V network 18, permitting, for example, charging 36 V battery B2 through 12 V battery B1, when necessary and in a controlled manner. Said two-way converter 25 has another output linked to a module acting on loads or MAL from which two outputs at 14 V and at 42 V derive, which pass through lower hierarchy fuse block LHF to block 15 of unit CB1. As indicated by its name in English, box SDN1 includes a microcontroller 1 linked by communications bus 19, such as a CAN bus for example, to a microcontroller which has not been shown in a differentiated manner, dependent on said unit CB1. Microcontroller 1 of box SDN1 acts on its MAL to suitably manage the power to be supplied to the different loads.

Figure 1 shows two other power distribution boxes SDN2 and SDN3 with components similar to those referred to when describing the box SDN1, although the DC/DC converters 26 and 27 included are one-way since said boxes SDN2 and SDN3 are connected to the 42 V network 18, therefore the only functionality of said DC/DC converters 26 and 27 is to supply power to the 14 V loads or to network 17. Numbers 2 and 3 indicate the microcontrollers integrated in each one of said boxes SDN2 and SDN3, respectively.

It can be seen in figure 1 that in 42 V network 18 there are at least two direct output branches 18a and 18b to power loads without passing through the respective module MAL of one of the distribution boxes SDN2 or SDN3.

By means of the explained structure and by carrying out permanent monitoring of the state of charge and state of health of batteries B1, B2, as well as the power demands of the different system parts, including possible supply sources (essentially for vehicle start up purposes) and supervising the voltage or polarity of an external supply susceptible to being connected to one of the posts of one of said batteries B1, B2, and by actuation by means of microcontrollers of boxes SDN1, SDN2 SDN3, a power transfer to the loads and between said batteries B1 and B2 is ensured at any time, having a perfectly controlled magnitude.

This permits:
a) feeding battery B1 from battery B2, using DC/DC converter 25 of box SDN1;
b) charging battery B2 (which has start up functions) from battery B1, likewise using DC/DC converter 25 of box SDN1;
c) disconnecting networks 17, 18, keeping a connection between batteries B1, B2 using disconnection devices 13, 14.

Figure 2 schematically shows the solution adopted for ensuring effective control over an external power source, for example, in the case in which a first vehicle, which has the system according to the invention assembled, must resort to a second vehicle for help in the start up task, making a connection between the electric systems of both vehicles.

According to a preferred embodiment example of the invention, a special post 30 has been provided, to which post the connection of the external battery must be made. Said post 30 has an associated voltage or polarity detection device 31, and the information thereof is managed, for example, by a microprocessor 32 with two outputs connected to respective power switches 33, 34 which are shown in the figure as power relays, thus noting their coils 33a, 34a and their switches 33b, 34b, although they could be assembled by means of a solid state semiconductor device or the like.

Through said power switches 33, 34 and according to the voltage or polarity detected in the auxiliary post 30, a power routing will be arranged from the external battery to either one of said batteries B1 or B2.

Having sufficiently described the invention so as to be carried out by a skilled person in the art, it is not necessary to amplify its object to several variations in detail, particularly use of equivalent functionality devices at different points of the explained structure, which do not alter its essence summarized in its essential aspects in the following claims.

## Claims

1. A controlled power transfer system in networks with sectors fed by two different batteries, applicable to automotive vehicles, with an architecture comprising at least a first battery B1 and a second battery B2 which can be charged from a generator G, both batteries B1, B2 being provided with a unit CB1, CB2 integrating at least one control module (10, 11) of the state of charge and state of health SOC, SOH of said batteries B1, B2 which feed respective networks (17, 18), a first one of them (17) integrating security and supervision or stand-by modules, and the second one (18) including at least one start up device, power being distributed to said networks (17, 18) from power distribution boxes SDN1, SDN2, SDN3 which include a management microcontroller (1, 2, 3), and the system integrating a communications bus (19), **characterized by** also comprising a detection device (30) of a voltage and/or polarity level of an external supply susceptible to being connected on at least one of the posts of one of said batteries B1 and B2, and controlled switching devices (33, 34) for routing said external power flow to a predetermined one of said two batteries B1 or B2, and in that said power distribution boxes SDN1, SDN2, SDN3 to the loads are interconnected and connected to said control units CB1, CB2 of batteries B1, B2, for carrying out permanent monitoring of the state of health and state of charge of said two batteries B1, B2 and providing controlled power transfer between the two batteries B1, B2, at any time, even in a situation when the vehicle engine start up key is off, regardless of consumption required by the loads and in prevention of future demands.

2. A system according to claim 1, **characterized in that** said switching devices (33, 34) are controlled by a microprocessor (32) receiving as input the voltage or polarity level in an auxiliary post (30a) intended for connection of said external power source.

3. A system according to claim 1, **characterized in that** said two batteries B1, B2 have differentiated voltage levels and **in that** each one of said power distribution boxes SDN1, SDN2 and SDN3 includes a converter (25, 26, 27), at least one (25) of said converters being two-way and permitting said power transfer between said batteries B1, B2 in either direction, according to the result of said monitoring of the state thereof.

4. A system according to claim 1 or 3, **characterized in that** it comprises three of said power distribution boxes SDN1, SDN2, and SDN3, a first of them SDN1 foreseen for feeding loads in the front area of the vehicle, a second one SDN2 intended for supplying a central area thereof, and a third one SDN3 applied for supplying power to a rear part of the vehicle.

5. A system according to claim 1 or 3, **characterized in that** it comprises three of said power distribution boxes SDN1, SDN2 and SDN3, a first of them SDN1 for feeding loads in the front area of the vehicle, a second one SDN2 intended for supplying a central area thereof, and a third one SDN3 foreseen for supplying power to a rear part of the vehicle, and **in that** the first of said boxes SDN1 is fed by battery B1 at a lower voltage level and includes said two-way converter (25) permitting feeding loads at said first voltage level and at a second, higher voltage level, the two remaining power distribution boxes SDN2 and SDN3 being connected to battery B2, at a higher voltage level, and each one of them integrating a one-way converter (26, 27) enabling power supply at said first lower voltage level.

6. A system according to claim 3, **characterized in that** said control unit CB1, CB2 associated to each one of the batteries B1, B2 comprises a power disconnection or BCO (Battery Cut Off) device (13, 14) applied to the automatic disconnection of the battery B1, B2 from its network, in the case of an accident or due to instructions received from one of the microcontrollers of the distribution boxes SDN1, SDN2, SDN3 or from the control unit CB1, CB2.

7. A system according to claim 6, **characterized by** integrating a user-accessible switch 13a, 14a for enabling or disabling said disconnection BCO devices (13, 14).

8. A power transfer control method in networks with sectors fed by two different batteries, applicable to automotive vehicles, with an architecture comprising at least a first battery B1 and a second battery B2 which can be charged from a generator G, both batteries B1, B2 being provided with a unit CB1, CB2 integrating at least one control module (10, 11) of the state of charge and state of health SOC, SOH of said batteries B1, B2 which feed respective networks (17, 18), a first one of them (17) integrating security and supervision or stand-by modules, and the second one (18) including at least one start up device, power being distributed to said networks (17, 18) from power distribution boxes SDN1, SDN2, SDN3 which include a management microcontroller (1, 2, 3), and the system integrating a communications bus (19), **characterized by** carrying out permanent monitoring of the state of health (SOH) and state of charge (SOC) of each one of said two batteries B1, B2 and of the voltage or polarity of the external supply susceptible to being connected to one of the posts of one of said batteries B1, B2, and by carrying out an actuation by means of microcontrollers for ensuring a power transfer between said two batteries B1, B2, at any time.

9. A method according to claim 7, **characterized in that** said two batteries B1, B2 have differentiated voltage levels, and **in that** each one of said power distribution boxes SDN1, SDN2, SDN3 includes a DC/DC converter (25, 26, 27), at least one (25) of said converters being two-way and carrying out said power transfer between said batteries B1, B2 through said converter, in either direction, according to the result of said monitoring of the state thereof.

10. A method according to claim 8, **characterized in that** said control unit CB1, CB2 associated to each one of the batteries B1, B2 comprises a power disconnection or BCO (Battery Cut Off) device (13, 14) applied to the automatic disconnection of the battery B1, B2 from its network (17, 18) in case of an accident or due to instructions received from one of the microcontrollers of the distribution boxes SDN1, SDN2, SDN3 or from the control unit CB1, CB2, and **in that** said disconnection BCO devices (13, 14) are susceptible to manually enabling or disabling by means of a user-accessible switch (13a, 14a).

11. A method according to claim 10, **characterized in that** in the case of supplying battery B2 at a higher voltage level from battery B1, at a lower voltage level, it will be checked that the SOC/SOH of the 12 V battery B1 is correct, and the discharge cycles of said battery B1 will likewise be controlled.

12. A method according to claim 11, **characterized in that** in order to ensure the efficacy of charging battery B2 at a higher voltage level, it is also ensured that battery B1 at a lower voltage level does not supply power to the unnecessary loads, disconnecting for such purposes said loads through the corresponding disconnection BCO device (13).

13. A method according to claim 9, **characterized in that** said disconnection BCO device (13, 14) disconnects the batteries B1, B2 from the networks which they are supplying, conserving the connection between said two batteries B1, B2, except in the case of actuation of the BCO device (13, 14) due to an accident.
